Europäisches Patentamt

(19) European Patent Office

Office européen des brevets

(11) Publication number: **0 269 575**
**A2**

(12) **EUROPEAN PATENT APPLICATION**

(21) Application number: **87830005.2**

(22) Date of filing: **09.01.87**

(51) Int. Cl.³: **B 01 D 35/04**

(30) Priority: **21.11.86 IT 2377786 U**

(43) Date of publication of application:
**01.06.88 Bulletin 88/22**

(84) Designated Contracting States:
**BE CH DE ES FR GB LI NL SE**

(71) Applicant: **F.LLI SAGLIO TROMBONE S.r.l.**
**Via A. di Dio, 199**
**I-28027 Ornavasso (Novara)(IT)**

(72) Inventor: **Saglio Trombone, Mario**
**Via A. di Dio, 199**
**I-28027 Ornavasso(IT)**

(72) Inventor: **Saglio Trombone, Angelo**
**Via A. di Dio, 199**
**I-28027 Ornavasso(IT)**

(74) Representative: **Cicogna, Franco**
**Ufficio Internazionale Brevetti Dott.Prof. Franco Cicogna**
**Via Visconti di Modrone, 14/A**
**I-20122 Milano(IT)**

(54) A filter having an integral shut-off valve.

(57) A filter, particularly for domestic water pipes includes a body (2) defining an inner chamber (3) having an inlet (4) for connection to a water delivery pipe and an outlet (5) for connection to a pipe leading to a tap. A filtering element (11) is housed within the chamber (3) and can be withdrawn upon removal of a closure plug (7) for cleaning or replacement.

Also housed in the filter chamber (3) upstream of the filtering element (11) is a valve shutter element (15) which is turnable by a lever (30) between a valve closed and a valve open position. The lever (30) serves not only for the operation of the valve but also as an indicator to show whether the valve is open or closed.

Fig. 2

- 1 -

"A filter having an integral shut-off valve"

The present invention relates to an improved structure provided with a spherical valve shutter controlled by a lever, the position of which indicates whether the valve is open or shut.

The filter of the present invention is particularly suitable for use on domestic water pipes. When taps having ceramic disc shutters are used, it is necessary to prevent grains of sand, granules of calcium and the like, which are often present in the water which is distributed in the domestic water network, from entering the tap since such particles could cause scratching and rapid wear of the ceramic discs, with a consequent loss of seal.

In order to overcome this disadvantage there are already known filters which are interposed in the water pipe upstream of the tap and which have a connector for connection to the delivery pipe and an output for connection to a tap, the body of the filter housing a filtering mesh. In order to be able to effect cleaning or possible replacement of the filtering mesh this latter is positioned under a plug element which can be removed to gain access to the mesh itself.

As is obvious, before removal of the plug it is necessary to close the water supply; this operation involves considerable inconvenience to the user. In fact, very often, the user forgets to preliminarily close the water supply before proceeding to open the

- 2 -

plug element, and therefore finds himself in grave difficulty when he must close the water in the shortest time possible. This operation, whilst being simple, in general requires a relatively long time since the stop cock is often a gate valve which must be operated by turning a hand wheel to bring the valve to its closure position. This can take several tens of seconds to close off the flow of water.

A further disadvantage is, moreover, constituted by the fact that this stop cock is often positioned a long way away from where the filtering element is positioned, with the possibility therefore, that even more water can escape if the user inadvertently opens the plug element of the filter without first closing off the water supply.

Conventional stop cocks with hand wheels, moreover, do not indicate to the user whether the cock itself is in the closure position or in the open position except by testing manually.

The present invention seeks to eliminate the above-mentioned disadvantages by providing an improved filter, particularly designed for domestic water pipes and provided with a spherical valve shutter controlled by a lever operating device; this latter permits the water flow to be shut off in an extremely short time and with an operating movement which is easy to perform and to check, thus having the possibility of quickly stopping any escape of water even if the plug element has been inadvertently opened before shutting off the water flow.

According to the present invention, therefore, there is provided a filter structure for domestic water pipes, comprising a body defining an internal chamber connectable to a water delivery pipe and to a pipe for delivering water towards a tap unit, with a filter element positioned in the said chamber, characterised by the fact that a valve shutter provided with a control lever for controlling the opening and closure of the valve shutter is positioned in the said chamber upstream of the said filtering element with respect to the direction of water flow through the chamber, the control lever being visible from the outside to act as an indicator to indicate if the valve shutter is in the open position or the closed position.

A particular advantage of the invention is that it provides an improved filter structure, particularly designed for domestic water pipes, which gives the possibility of having a stop cock close to the plug element of the filter therefore making the closure operation rapid and always immediately possible.

Another advantage of the improved filter of the invention is that it is structurally simple and presents the widest guarantees of reliability and safety in use.

A further advantage of the present invention is that it provides a filter structure, particularly suitable for domestic water pipes, which is easily obtainable starting from commonly commercially available elements, and which, moreover, is advantageous from an economic point of view.

One embodiment of the invention will now be more particularly described by way of example with reference to the accompanying drawings, in which:

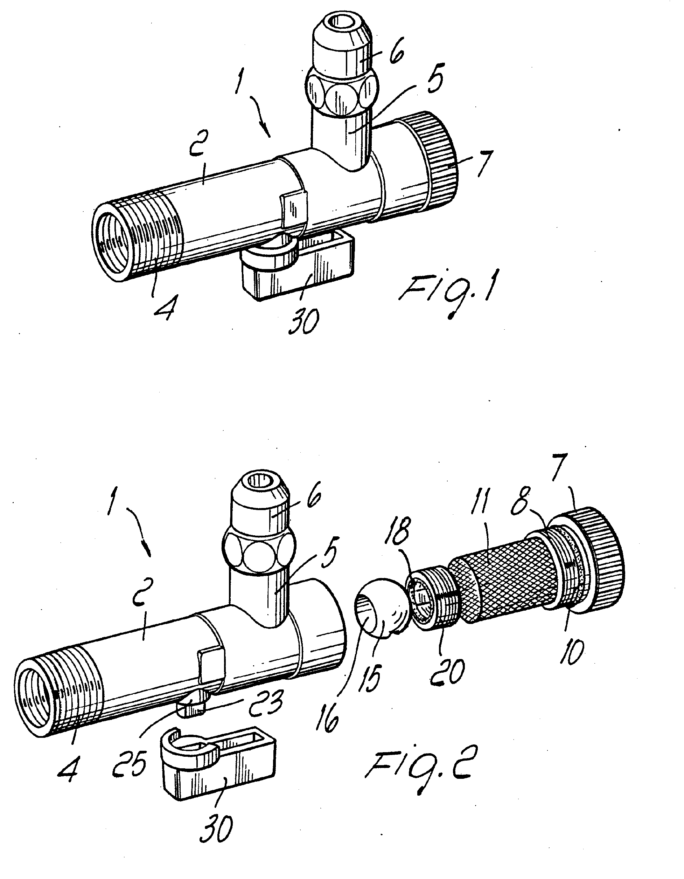

Figure 1 is a perspective view of a filter structure formed according to the invention;

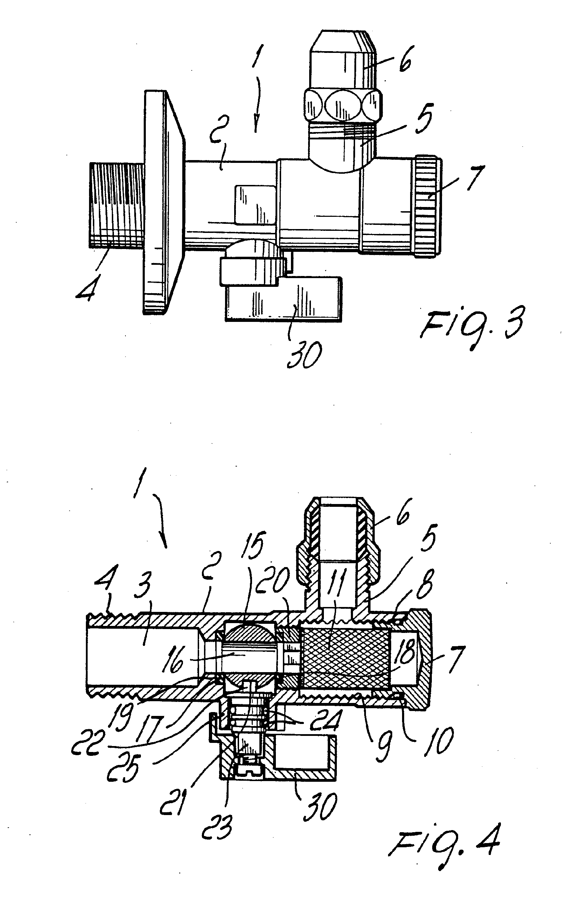

Figure 2 is an exploded perspective view of the filter structure of Figure 1;

Figure 3 is a side view of the filter structure of Figures 1 and 2; and

Figure 4 is a longitudinal sectional view of the filter structure of the invention.

Referring now to the drawings the filter structure of the invention, which is generally indicated with the reference numeral 1, includes a body 2 which defines within it an inner chamber 3 which, at one end, is connectable by means of a threaded inlet connector 4 to a water delivery pipe (not shown). Close to the opposite end of the chamber 3 there is an outlet 5 which projects laterally of the body 2 and which is provided with a connector 6 for connection to the usual flexible duct or pipe supplying the tap unit.

At the opposite end from the inlet connector 4 the chamber 3 is closed by a plug element 7 which is provided with an external threading 8 which engages with an inner threading 9 of the chamber 3, and which is provided with a seal 10. To the plug element 7 is connected a filtering mesh 11 having a substantially cylindrical conformation, which is interposed in the path of the water towards the delivery outlet 5. Within the chamber 3, upstream of the filtering element 11 there is provided an interception valve which is provided with an actuating lever the opening and closure position of which is easily visible from the outside. This valve is constituted by a generally spherical valve shutter 15 with a diametral duct 16 which can be aligned with the water flow to allow the passage of water through the valve, and is rotatable through 90° in such a way as to prevent the passage of water through the valve.

The spherical valve shutter 15 is engaged by first and second annular seals 17 and 18 respectively, which advantageously are formed in polytetrafluoroethylene (commonly called Teflon) which offers the greatest guarantee of resistance to wear. The first

- 5 -

annular seal 7 is housed in a radially inwardly projecting abutment shoulder portion 19 defined by the inner surface of the chamber 3. The second annular seal 18 is supported by a threaded ring nut 20 which is screwed into the chamber 3 for exactly positioning the spherical valve shutter 15.

The valve shutter 15 is provided with a peripheral slot 21 which is engaged by a key 22 connected to a rod 23 sealingly housed by means of O-rings 24, in a lateral projection 25 defined by the body 2. At the outer end of the rod 23 there is connected a lever 30 which can be positioned in alignment with the body 1, when the valve shutter 15 is in the open position, whilst it is disposed perpendicularly with respect to the length of the body 2 when the valve shutter 15 is in the closed position intercepting the flow.

With the embodiment described there is therefore the possibility of instantaneously and rapidly closing the water passage when it is desired to remove the plug element 7 to clean or replace the filtering element 11. This operation can also be performed immediately if the user has inadvertently forgotten to close the water before proceeding to open the plug element 7. Thus, by providing a simple shutter-type valve the flow can quickly and easily be shut off. The use of a spherical valve is of importance since, as well as ensuring the widest guarantee around the seal, it can be actuated with great rapidity and simplicity even in difficult conditions, by means of a control lever.

Moreover, the position of the lever 30 immediately shows the user the opening or closure condition, therefore reducing to the minimum the possibility of erroneous or accidental opening.

- 6 -

Claims:

1.    A filter structure for domestic water pipes, comprising a body (2) defining an internal chamber (3) connectable to a water delivery pipe and to a pipe for delivering water towards a tap unit, with a filter element (11) positioned in the said chamber, characterised by the fact that a valve shutter (15) provided with a control lever (30) for controlling opening and closure of the valve shutter (15) is positioned in the said chamber (3) upstream of the said filtering element (11) with respect to the direction of water flow through the chamber (3), the control lever (30) being visible from the outside to act as an indicator to indicate if the valve shutter (15) is in the open position or the closed position.

2.    A filter structure according to Claim 1, characterised by the fact that the valve shutter (15) is substantially spherical and is sealed in the chamber (3) by respective annular seals (17, 18) acting on opposite sides thereof.

3.    A filter structure according to Claim 2, characterised by the fact that a first (17) of the said annular seals is housed in a projection (19) defined in the inner chamber, whilst the second annular seal (18) is supported by a shutter-positioning ring nut (20) which can be screwed within the said chamber (3).

4.    A filter structure according to Claim 2 or Claim 3, characterised by the fact that the said spherical valve shutter (15) has a slot (21) in a portion of its surface, which is engaged by a key element (22) connected to a rod (23) sealingly projecting from the said body (2).

5.    A filter structure according to any preceding Claim, characterised by the fact that the opening and closure control lever (30) is turnable substantially through 90° between a fully open position of the valve and a fully closed position thereof.

6.    A filter structure according to any preceding Claim, characterised by the fact that it includes a plug element (7) which can be screwed into one end of the chamber (3) and is provided with an annular seal (10), the plug element closing an opening in the said body (2) through which the filter element (11) is removable for cleaning or replacement.

0269575

1/2

Fig.1

Fig.2

0269575

2/2

Fig. 3

Fig. 4